Europäisches Patentamt

European Patent Office

Office européen des brevets

(11) Veröffentlichungsnummer : **0 183 949**
**B1**

(12) **EUROPÄISCHE PATENTSCHRIFT**

(45) Veröffentlichungstag der Patentschrift :
26.04.89

(51) Int. Cl.⁴ : **F 16 C 1/26**

(21) Anmeldenummer : 85112961.9

(22) Anmeldetag : 12.10.85

(54) **Einrichtung zur Festlegung des Mantels eines flexiblen Zug- oder Druckorgans.**

(30) Priorität : 15.11.84 DE 3441716

(43) Veröffentlichungstag der Anmeldung :
11.06.86 Patentblatt 86/24

(45) Bekanntmachung des Hinweises auf die Patenterteilung : 26.04.89 Patentblatt 89/17

(84) Benannte Vertragsstaaten :
AT BE FR GB IT NL SE

(56) Entgegenhaltungen :
DE—A— 3 007 461
FR—A— 2 526 503
GB—A— 1 491 988
US—A— 4 339 213
US—A— 4 447 032

(73) Patentinhaber : Preh-Werke GmbH & Co. KG
Postfach 1740 An der Stadthalle
D-8740 Bad Neustadt/Saale (DE)

(72) Erfinder : Bauer, Karl-Heinz
Lerchenstrasse 9
D-8740 Bad Neustadt/Saale (DE)
Erfinder : Fick, Heinz
Wagstädter Strasse 25
D-8740 Bad Neustadt/Saale (DE)

## Beschreibung

Die Erfindung betrifft eine Einrichtung zur axialen Festlegung eines mit einem Bund versehenen Endes eines Mantels, in dem ein flexibles Zug- oder Druckorgan geführt ist, an einem Halteblock gemäß dem ersten Teils des Anspruchs 1.

Eine derartige Einrichtung ist in dem DE-U-83 32 864 beschrieben. Es ist dort an dem Mantel ein Kupplungsteil mit verschiedenen Stufen und Flächen vorgesehen. Ein solches Teil ist aufwendig und läßt sich nicht ohne weiteres einstückig mit dem Mantel ausbilden.

Bei der Einrichtung nach dem DE-U-83 32 864 ist die Montage des Bowdenzugs nicht einfach. Denn zunächst muß der Zugdraht durch den Schlitz des Halteblocks geführt werden. Anschließend muß das Kupplungsteil in axialer Richtung in den Halteblock eingeschoben werden.

In der DE-A-32 47 115 ist ein Bowdenzug beschrieben, an dessen Ende ein gepuffertes Flanschteil befestigt ist. Eine Buchse des Flanschteils wird in eine Öffnung einer Befestigungswand eingesetzt und von der Gegenseite mit einem Preßring festgelegt. Auch diese Art der Befestigung ist mit mehreren Handgriffen bzw. Arbeitsschritten verbunden.

In der DE-A-29 21 235 ist eine Schlauchfassung beschrieben, die dem Kupplungsteil des genannten Gebrauchsmusters ähnlich ist. Die Schlauchfassung kann in axialer Richtung fixiert werden.

In der DE-A-28 21 374 ist eine selbsthaltende Kabelverankerung mit einer Innenhülse und einer Außenhülse beschrieben. Auch hier ist die Montage nicht einfach.

In der FR-A-25 26 503 wird ein Ring mit einem Ringwulst an einem Ende des Ringes auf das Führungsrohr eines Zug- oder Druckkraftübertragenden Kabels festgelegt. Die gesamte Anordnung wird in eine Hülse eingefädelt, bis der Ringwulst an der Hülse anliegt und damit das Führungsrohr an der Hülse axial festlegt.

Aufgabe der Erfindung ist es, eine Einrichtung der eingangs genannten Art vorzuschlagen, bei der das axiale und radiale Festlegen des Mantels an dem Halteblock auf einfache Weise ohne axiales Einfädeln durchgeführt werden kann.

Erfindungsgemäß ist obige Aufgabe bei einer Einrichtung der eingangs genannten Art dadurch gelöst, daß die Ausnehmung an der der Federzunge zugewandten Seite in Richtung der Festlegungsachse einseitig offen ist und an ihrem Grund die Stirnseite des Bundes, die dem Ende des Mantels abgewandt ist, anschlägt und ihre Randfläche den Bund umfaßt, daß der auch den Grund unterbrechende Schlitz wenigstens im Bereich der Randfläche weniger breit als der Außendurchmesser des Bundes ist und daß im Halteblock, vor der Ausnehmung an der der Federzunge zugewandten Seite, ein Raum zum Einsetzen des Bundes vorgesehen ist und die Ausnehmung sich in diesem Raum öffnet.

Es ist günstig, daß hier ein einziger Bund am Mantel genügt, um diesen festlegen zu können.

Ein solcher Bund läßt sich am Mantel selbst durch Pressen unter Wärme herstellen.

Den Mantel an dem Halteblock festzulegen, ist äußerst einfach. Er wird lediglich radial in den Schlitz eingelegt und anschließend so gezogen, daß sein Bund in die Ausnehmung gelangt. Dabei schnappt die Federzunge vor die Stirnseite des Mantelendes. Der Mantel ist gegen eine Bewegung in der einen Achsrichtung durch den in der Ausnehmung liegenden Bund gehalten. Gegen eine Bewegung in der anderen Achsrichtung ist er durch die Federzunge festgelegt. Die Ausnehmung verhindert gleichzeitig, indem sie den Bund umfaßt, daß der Mantel aus dem Schlitz springt.

Weil das Festlegen des Mantels an dem Halteblock einfach ist, kann es auch unter beengten Bedingungen und bei ungünstigen Sichtverhältnissen erfolgen. Es ist auch ein maschinelles Festlegen des Mantels am Halteblock möglich.

Vorteilhafte Ausgestaltungen der Erfindung ergeben sich aus der folgenden Beschreibung eines Ausführungsbeispiels und den unteransprüchen. In der Zeichnung zeigen :

Figur 1 einen flexiblen Zug- und Druckdraht mit einem Mantel,

Figur 2 den Mantel in einem Halteblock festgelegt.

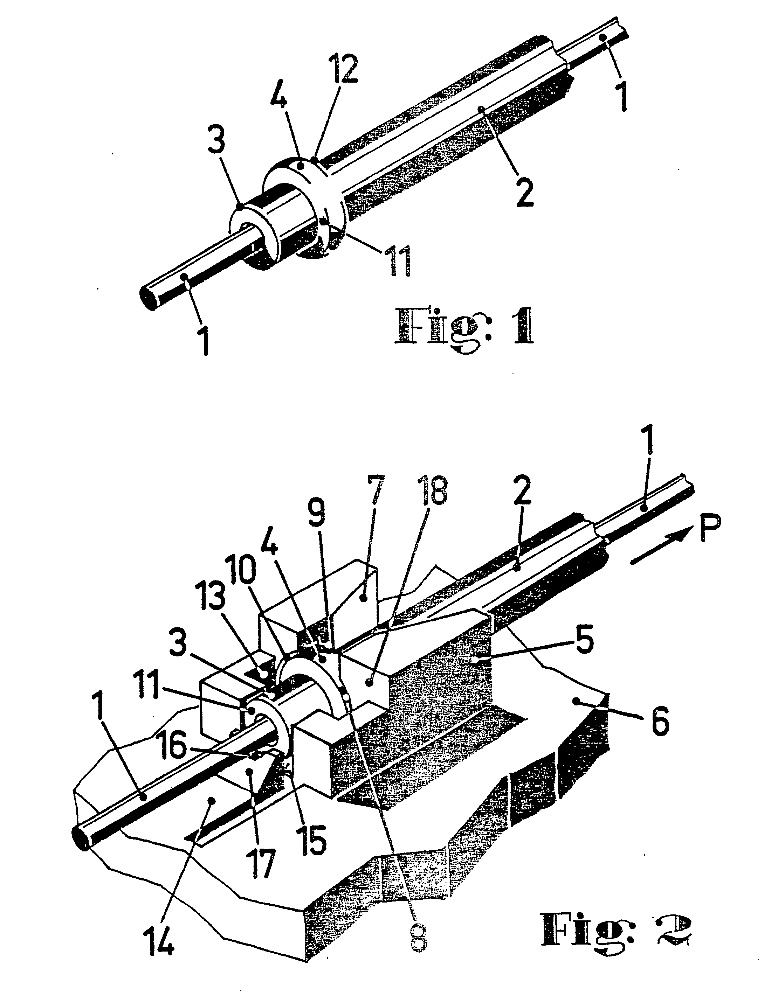

Ein flexibler Draht 1 ist verschieblich in einem Kunststoffmantel 2 geführt. Im Bereich des Endes 3 des Mantels 2 ist ein Bund 4 ausgebildet. Dieser ist beispielsweise durch Stauchen des Mantels 2 unter Hitze hergestellt.

Zur Festlegung des Endes 3 des Mantels 2 ist ein Halteblock 5 an einem Träger 6 ausgebildet. Der Halteblock 5 weist einen durchgehenden Schlitz 7 auf, der sich nach hinten aufweitet. Vorn ist der Halteblock 5 mit einer nach vorn offenen Ausnehmung 8 versehen, die von einem Grund 9 und einer Randfläche 10 begrenzt ist. Der Schlitz 7 durchbricht auch den Grund 9 und die Randfläche 10. Im Bereich der Randfläche 10 ist der Schlitz 7 etwa so breit wie der Durchmesser des Mantels 2. Er ist kleiner als der Außendurchmesser des Bundes 4.

Der Bund 4 liegt mit seiner der Stirnseite 11 des Endes 3 abgewandten Seite 12 am Grund 9 an. Sein Umfang ist von der Randfläche 10 so umfaßt, daß der Bund 4 nicht nach oben durch den Schlitz 7 ausweichen kann.

Vor der Ausnehmung 8 ist ein Raum 13 ausgebildet, dessen Querschnitt dem des Bundes 4 entspricht und der nach oben offen ist.

Vor dem Raum 13 ist am Träger 6 eine Federzunge 14 ausgebildet, die in der Fluchtlinie des Schlitzes 7 liegt. Die Federzunge 14 weist eine der Stirnseite 11 zugewandte Anschlagfläche 15 auf. An der Federzunge 14 ist eine Auskehlung 16 ausgebildet, damit diese die freie Verschiebbarkeit des Drahtes 1 nicht behindert. An der Federzunge 14 ist eine Anlaufschräge 17 ausgebildet.

Zur Montage des Mantels 2 mit dem in ihm geführten Draht 1 wird zunächst der Mantel 2 von oben in den Schlitz 7 gelegt. Dabei kann der Bund 4 im Bereich der Federzunge 14 liegen. Danach wird an dem Mantel 2 in Richtung des Pfeiles P gezogen. Der Bund 4 gleitet dann die Anlaufschräge 17 hoch und wird an den Flächen 18 des Halteblocks 5 anschlagen. Er steht dabei über dem Raum 13, in den er dann gedrückt wird. Dabei wird die Federzunge 14 durch das Ende 3 des Mantels 2 nach unten geschwenkt. Anschließend wird weiter in Richtung des Pfeiles P am Mantel 2 gezogen. Dabei gelangt dann der Bund 4 in die Ausnehmung 8, an deren Grund 9 er anschlägt. Die Federzunge 14 schnappt vor die Stirnseite 11.

Es kann auch darauf verzichtet werden, den Bund 4 über die Anlaufschräge 17 hochzuziehen. Der Bund 4 des Mantels 2 kann dann direkt in den Raum 13 eingedrückt werden, wonach er durch Ziehen am Mantel 2 in die Ausnehmung 8 gelangt.

Nach der Montage des Mantels 2 am Halteblock 5 kann sich der Mantel 2 gegenüber dem Halteblock 5 weder in Richtung des Pfeiles P noch in Gegenrichtung bewegen. Die eine Bewegung verhindert der Grund 9 zusammen mit dem Bund 4. Die andere Bewegung verhindert die Anschlagfläche 15 zusammen mit der Stirnseite 11. Der Mantel 2 kann den Schlitz 7 nicht verlassen, da sein Bund 4 von der Ausnehmung 8 umgriffen ist.

In anderer Ausgestaltung der Erfindung kann die Federzunge 14 vor die der Seite 12 abgewandten Seite des Bundes 4 geschnappt sein.

## Patentansprüche

1. Einrichtung zur axialen Festlegung eines mit einem Bund (4) versehenen Endes (3) eines Mantels (2), in dem ein flexibles Zug- oder Druckorgan (1) geführt ist an einem Halteblock (5), welcher
- mit einem in Richtung der Festlegungsachse in etwa mit der Breite des Mantels (2) durchgehend verlaufenden, radial offenen Schlitz (7),
- mit einer in Richtung der Festlegungsachse verlaufenden Ausnehmung (8), deren Randfläche (10) der Schlitz (7) unterbricht, und
- mit einer davor in der Fluchtlinie des Schlitzes (7) und deren offener Seite gegenüberliegend vorgesehenen Federzunge (14), an die eine radial orientierte Fläche (11) des Mantels (2) anschlägt, versehen ist, dadurch gekennzeichnet,
- daß die Ausnehmung (8) an der der Federzunge (14) zugewandten Seite in Richtung der Festlegungsachse einseitig offen ist und an ihrem Grund (9) die Stirnseite (11) des Bundes (4), die dem Ende (3) des Mantels (2) abgewandt ist, anschlägt und ihre Randfläche (10) den Bund (4) umfaßt,
- daß der auch den Grund (9) unterbrechende Schlitz (7) wenigstens im Bereich der Randfläche (10) weniger breit als der Außendurchmesser des Bundes (4) ist und
- daß im Halteblock, vor der Ausnehmung (8) an der der Federzunge (14) zugewandten Seite, ein Raum (13) zum Einsetzen des Bundes (4) vorgesehen ist und die Ausnehmung (8) sich in diesem Raum (13) öffnet.

2. Einrichtung nach Anspruch 1, dadurch gekennzeichnet, daß am Mantel (2) ein einziger Bund (4) vorgesehen ist.

3. Einrichtung nach einem der Ansprüche 1 oder 2, dadurch gekennzeichnet, daß an die Federzunge (14) das Ende (3) des Mantels (2) anschlägt.

4. Einrichtung nach einem der Ansprüche 1 oder 2, dadurch gekennzeichnet, daß an die Federzunge (14) der Bund (4) mit seiner dem Grund (9) abgewandten Seite anschlägt.

5. Einrichtung nach einem der vorhergehenden Ansprüche, dadurch gekennzeichnet, daß an der Federzunge (14) eine Anlaufschräge (17) ausgebildet ist.

6. Einrichtung nach einem der vorhergehenden Ansprüche, dadurch gekennzeichnet, daß an den Raum (13) eine Fläche (18) des Halteblocks (5) angrenzt.

## Claims

1. Device for axially fixing a flanged (4) end (3) of a casing (2), through which a flexible traction or pressure member (1) runs, on a retaining block (5) provided with the following :
- a radially open slot (7) extending continuously in the direction of the fixing axis and approximately the same width as the casing (2) ;
- a recess (8) extending in the direction of the fixing axis and through whose peripheral surface (10) the slot (7) passes ; and
- a spring tongue (14) provided in front of said recess in alignment with the slot (7) and situated opposite the open side of said recess, one radially directed face (11) of the casing (2) striking against said spring tongue, characterised in that
- the recess (8) on the face nearest the spring tongue (14) is open on one side towards the fixing axis and its floor (9) strikes the end face (11) of the flange (4) that is remote from the end (3) of the casing (2), and its peripheral face (10) encircles the flange (4) ;
- the slot (7), which also penetrates the floor (9), is at least in the region of the peripheral face (10) less broad than the external diameter of the flange (4) ; and
- in the retaining block, in front of the recess (8) on the side facing the spring tongue (14), a compartment (13) is provided in which to insert the flange (4) and the recess (8) opens into this compartment (13).

2. Device according to claim 1, characterised in that a single flange (4) is provided on the casing (2).

3. Device according to one of claims 1 or 2, characterised in that the end (3) of the casing (2) strikes against the spring tongue (14).

4. Device according to one of claims 1 or 2, characterised in that the side of the flange (4) that is remote from the floor (9) strikes against the spring tongue (14).

5. Device according to one of the preceding claims, characterised in that the spring tongue (14) incorporates a lifting slope (17).

6. Device according to one of the preceding claims, characterised in that one face (18) of the retaining block (5) is contiguous with the compartment (13).

**Revendications**

1. Dispositif destiné à la fixation axiale sur un bloc (5) de retenue d'une extrémité (3) munie d'un bourrelet (4) appartenant à une gaine (2) dans laquelle passe un organe (1) flexible transmettant des forces de traction ou de poussée, lequel dispositif comporte
- une fente (7) radiale, ouverte et continue, qui s'étend dans le sens de l'axe de fixation en ayant approximativement la largeur de la gaine (2),
- un creux (8) s'étendant dans le sens de l'axe de fixation, dont la surface de bord (10) est interrompue par la fente (7),
- et une languette (14) formant ressort, prévue sur le devant dans l'alignement de la fente (7) et située en face du côté ouvert de cette fente, languette sur laquelle vient en butée une surface (11) orientée radialement, de la gaine (2), caractérisé en ce que
- le creux (8) est ouvert d'un côté, dans le sens de l'axe de fixation, du côté dirigé vers la languette (14) formant ressort et ce creux s'appuie, par son fond (9), contre la face frontale (11) du bourrelet (14) qui est à l'opposé de l'extrémité (3) de la gaine (2), et il entoure le bourrelet avec sa surface de bord (10),
- la fente (7), qui interrompt également le fond (9) est, au moins dans la zone de la surface de bord (10), moins large que le diamètre extérieur du bourrelet (4),
- et un espace (13) destiné à la mise en place du bourrelet (4) est prévu dans le bloc de retenue en avant du creux (8) sur le côté tourné vers la languette (14) et le creux (8) s'ouvre dans cet espace (13).

2. Dispositif selon la revendication 1, caractérisé en ce qu'un seul bourrelet (4) est prévu sur la gaine (2).

3. Dispositif selon une des revendications 1 ou 2, caractérisé en ce que l'extrémité (3) de la gaine (2) s'appuie contre la languette (14) formant ressort.

4. Dispositif selon une des revendications 1 ou 2, caractérisé en ce que le bourrelet (4) s'appuie, par son côté opposé au fond (9), contre la languette (14) formant ressort.

5. Dispositif selon une des revendications précédentes, caractérisé en ce qu'une surface inclinée (17) d'amorçage ou d'accès est formée sur la languette (14) formant ressort.

6. Dispositif selon une des revendications précédentes, caractérisé en ce qu'une surface (18) du bloc (5) de retenue avoisine l'espace (13).

Fig. 1

Fig. 2